# EUROPEAN PATENT SPECIFICATION

(11) **EP 3 112 020 B1**
(45) Date of publication and mention of the grant of the patent: **16.12.2020**
(21) Application number: 15755341.3
(22) Date of filing: 26.02.2015
(51) Int. Cl.: B01J 20/22, B01J 20/34, C01G 39/00, C01G 41/00, C12N 11/14, C12P 3/00, C22B 3/00, C22B 7/00, C22B 3/24, C22B 34/30, C22B 34/36

(54) **METAL-COMPOUND ADSORBENT AND METHOD FOR RECOVERING METAL COMPOUND USING SAME**
METALLVERBINDUNGSADSORPTIONSMITTEL UND VERFAHREN ZUR RÜCKGEWINNUNG EINER METALLVERBINDUNG DAMIT
ADSORBANT DE COMPOSÉ MÉTALLIQUE ET PROCÉDÉ DE RÉCUPÉRATION DE COMPOSÉ MÉTALLIQUE L'UTILISANT

(30) Priority: 26.02.2014 JP 2014035507; 19.03.2014 JP 2014056542; 20.08.2014 JP 2014167646; 03.12.2014 JP 2014245094
(43) Date of publication of application: 04.01.2017
(73) Proprietor: Kyocera Corporation, Kyoto-shi, Kyoto 612-8501 (JP)
(72) Inventor: TERASHI, Yoshitake, Kyoto-shi Kyoto 612-8501 (JP); MAKINO, Takahiko, Kyoto-shi Kyoto 612-8501 (JP); SUHARA, Toshiki, Kyoto-shi Kyoto 612-8501 (JP)
(74) Representative: Viering, Jentschura & Partner mbB Patent- und Rechtsanwälte
(86) International application number: PCT/JP2015/055725
(87) International publication number: WO 2015/129835

(56) References cited:
- EP-A1- 2 268 840
- DE-A1- 3 928 201
- JP-A- H05 111 685
- JP-A- S50 161 483
- JP-A- 2002 079 269
- JP-A- 2005 219 013
- JP-A- 2006 281 154
- JP-A- 2010 214 336
- JP-A- 2011 523 396

## Description

### TECHNICAL FIELD

The present invention relates to a metal compound adsorbent to adsorb a metal compound that becomes a negative ion in solution, and a method of recovering a metal compound using the metal compound adsorbent.

### BACKGROUND ART

A technology for recycling metals or metal compounds has been advanced. For example, tungsten and molybdenum are ingredients that constitute super hard alloys, such as cemented carbide and cermet, and are often used for cutting tools together with cobalt, niobium, or the like. Tungsten and molybdenum have a high melting point and are therefore used for various purposes, such as heating elements, structural members, catalysts for petrochemical industry, environmental equipment, wiring lines for ceramic wiring boards, and heat dissipation members.

For effective utilization of these resources, a method of recycling tungsten and molybdenum from scraps has been devised. For example, there are two methods of recycling a scrapped cemented carbide tool, namely, a direct method of reproducing a solid scrap into powder while retaining constituents of the solid scrap, and an indirect method of chemically dissolving the scrap and then separately recovering on a constituent basis.

A typical example of the direct method is a zinc processing method (for example, refer to Patent Document 1). With this method, zinc can also be recovered for reuse without using any chemicals and solution. This method is also excellent in terms of a low energy consumption, and has the advantage that a small-scale industrial production is achievable with relatively small investments to processing facilities.

A process of refining ore is generally applied to a wet chemical processing method that is the indirect method (for example, refer to Patent Document 2). In one of specific methods, as shown in FIG. 3 , a sodium tungstate (Na₂WO₄) aqueous solution is firstly prepared using cemented carbide scrap with alkali extraction method and alkali resolution method (alkali extraction/alkali resolution). On this occasion, metal impurities, except for tungsten, contained in the aqueous solution are removed by being precipitated as a poorly soluble compound by pH adjustment and sulfurization, followed by filtering as needed. Subsequently, tungsten is separately extracted with a solvent from the filtered sodium tungstate (Na2WO4) aqueous solution, or ion exchange is carried out (solvent extraction/ion exchange). Ammonia is added thereto to perform ammonia dissolution (ammonia dissolution). This is then subjected to heating concentration and crystallization (heating concentration and crystallization), thereby obtaining ammonium paratungstate (APT). This is then oxidized and thermally decomposed (oxidization and thermal decomposition), thereby obtaining tungsten oxide.

### PRIOR ART DOCUMENTS

### PATENT DOCUMENTS

Patent Document 1: Japanese Patent Publication No. 03-020445
Patent Document 2: Japanese Unexamined Patent Publication No. 2004-002927

DE 3928201 A1 describes the recovery of heavy metals from an aqueous solution and an adsorbent wherein poly(γ-glutamylcysteinyl)glycine is immobilized on an inert material.

EP 2268840 A2 describes a method for reclaiming molybdate or tungstate from an aqueous solution, in which molybdate or tungstate from the aqueous solution is bound to a cationized inorganic carrier material.

### SUMMARY OF THE INVENTION

### PROBLEMS TO BE SOLVED BY THE INVENTION

There is a demand for a metal compound adsorbent with which a metal compound can be recovered through a simpler process sequence than the above conventional method. There is also a demand for a method of recovering a metal compound using the metal compound adsorbent.

### MEANS FOR SOLVING THE PROBLEMS

The invention is described in the independent claims, preferred embodiments of the invention are described in the dependent claims.

A metal compound adsorbent of fan embodiment contains a free amino acid. The metal compound adsorbent contains, as the free amino acid, at least one kind of a first amino acid selected from among alanine, cystine, methionine, tyrosine, lysine, valine, glutamic acid, histidine, proline, threonine, asparagine, glycine, isoleucine, ornithine, arginine, serine, citrulline, and cystathionine. The metal compound adsorbent contains a total amount of 10 mol% or more of the free amino acid of the first amino acid relative to a total amount of the free amino acid.

Another metal compound adsorbent of the embodiment contains at least one kind of a first amino acid selected from among alanine, cystine, methionine, tyrosine, lysine, valine, glutamic acid, histidine, proline, threonine, asparagine, glycine, isoleucine, ornithine, arginine, serine, citrulline, and cystathionine. At least a part of the first amino acid is present in solution as a free amino acid. The metal compound adsorbent contains a total amount of 10 mol% or more of the free amino acid of the first amino acid relative to a total amount of the free amino acid.

A method of recovering a metal compound according to an embodiment includes: obtaining a metal compound solution in which a metal compound ion of a metal compound that becomes a negative ion in solution is dissolved; causing adsorption of the metal compound ion onto the metal compound adsorbent by adjusting a pH of the metal compound solution to a value at which the free amino acid of the metal compound adsorbent becomes a positive ion by adding either one of the foregoing metal compound adsorbents to the metal compound solution; and recovering the metal compound adsorbent with the metal compound ion adsorbed thereon.

### EFFECTS OF THE INVETION

With the metal compound adsorbent and the method of recovering a metal compound using the metal compound adsorbent, it is possible to recover the metal compound through a simple process sequence.

### BRIEF DESCRIPTION OF THE DRAWINGS

FIG. 1 is a flowchart that shows an outline of a method of recovering a tungsten compound as a first embodiment of a method of recovering a metal compound;
FIG. 2 is a flowchart that shows an outline of a method of recovering a tungsten compound as a second embodiment of a method of recovering a metal compound; and

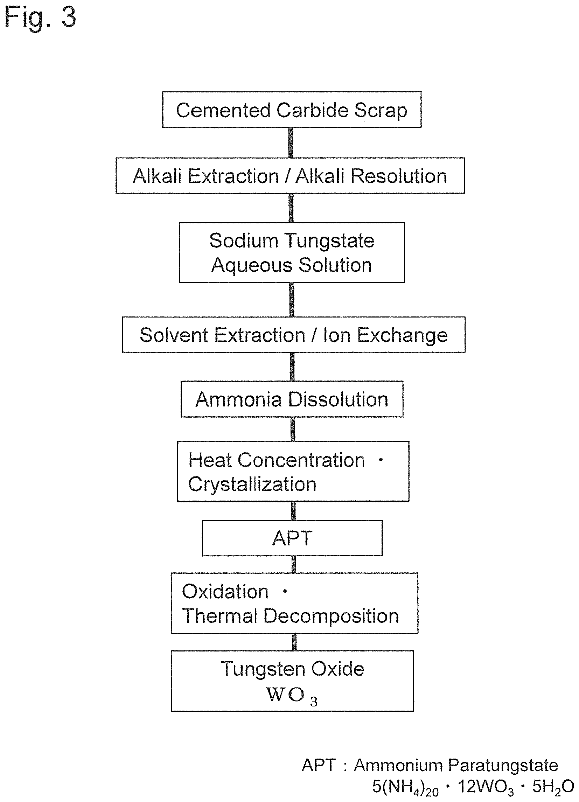

FIG. 3 is a flowchart that shows an outline of an embodiment of a conventional method of recovering a tungsten compound.

### EMBODIMENTS FOR CARRYING OUT THE INVENTION

A metal compound adsorbent and a method of recovering a metal compound using the metal compound adsorbent according to an embodiment are specifically described below. The metal compound adsorbent of the present embodiment (hereinafter also referred to as "adsorbent") adsorbs a metal compound being present in solution as a negative ion.

Examples of the metal compound to be recovered with the adsorbent of the present embodiment include compounds, such as tungsten oxide, molybdenum oxide, uranium oxide, titanium oxide, tin oxide, vanadium oxide, chromium oxide, and manganese oxide. These metal compounds can respectively be present in solution as tungstic acid ion, molybdic acid ion, uranic acid ion, titanic acid ion, stannic acid ion, vanadic acid ion, (meth)vanadic acid ion, chronic acid ion, dichromic acid ion, manganic acid ion, and permanganic acid ion by performing pH adjustment as needed. All these metal compounds are present as a negative ion, and therefore can be adsorbed onto the adsorbent of the present embodiment. A recovery rate for the metal compound is high when containing at least one of tungstic acid ion and molybdic acid ion.

The adsorbent of the first embodiment contains, as a free amino acid, at least one kind of a first amino acid selected from among alanine, cystine, methionine, tyrosine, lysine, valine, glutamic acid, histidine, proline, threonine, asparagine, glycine, isoleucine, ornithine, arginine, serine, citrulline, and cystathionine. The adsorbent contains 10 mol% or more of the first amino acid as a free amino acid (also referred to as "first free amino acid") relative to a total amount of the free amino acid.

This makes it possible to recover the metal compounds through the simple process sequence. Additionally, environmental pollution is reducible because there is no need to use a large amount of chemicals.

The free amino acid in the adsorbent may also be present as a solid, and may also be present as a free amino acid when dissolved in solution. In either case, the metal compounds can be recovered through the simple process sequence by containing the free amino acid in solution and by using the adsorbent therefor.

An example of the adsorbent of the first embodiment is one in which a free amino acid is carried on a surface of a base material. For example, peptides containing a free amino acid, proteins, and materials that form living bodies, such as microorganisms (hereinafter also referred to as "biological materials"), organic materials, such as resins, or inorganic materials are usable as the base material.

Examples of the microorganisms include bacteria, such as E. coli (Escherichia coli), Bacillus sp. Thiobacillus ferrooxidans, Streptomyces rimosus, Pseudomonas sp, Bacillus thuringiensis, Arthrobacter nicotianae, Shewanella algae, and Shewanella oneidensis, yeasts, such as Saccharomyces cerevisiae, Schizosaccharomyces pombe, Candida albicans, Yarrowia lipolytica, Pichia pastoris, Hansenula polymorpha, and Kluyveromyces lactic, and Aspergillus oryzae.

The adsorbent composed of the biological materials can take various forms, such as powder, pellet formed by molding of powder, gel, and aqueous solution. It is easy to preserve and handle when being in powder or pellet form. When the adsorbent is a solid, such as powder or pellet, the solid needs to be firstly dissolved in another liquid, such as water, and then added to a solution containing a metal compound. Alternately, the solid needs to directly be added to the solution containing the metal compound.

The adsorbent of the first embodiment preferably contains: as a free amino acid, at least one kind of an amino acid of the first amino acids (hereinafter also referred to as "No. 1-1 amino acid") selected from among alanine, cystine, methionine, tyrosine, lysine, valine, glutamic acid, histidine, and proline; at least one kind of an amino acid of the first amino acids (hereinafter also referred to as "No. 1-2 amino acid") selected from among threonine, asparagine, glycine, isoleucine, ornithine, and arginine; and at least one kind of an amino acid of the first amino acids (hereinafter also referred to as "No. 1-3 amino acid") selected from among serine, citrulline, and cystathionine. Alternatively, the adsorbent may contain, as a free amino acid, at least one kind of a second amino acid selected from among phosphoserine, aspartic acid, leucine, and phenylalanine at a ratio of 40 mol% or less relative to a total amount of the free amino acid.

The adsorbent containing, as a free amino acid, No. 1-1 amino acid, No. 1-2 amino acid, and No. 1-3 amino acid is capable of enhancing recovery efficiency for the metal compound.

In the case of using the above adsorbent and using two or more kinds of No. 1-1 amino acids, the adsorbent contains No. 1-1 amino acids, as a free amino acid, at such a ratio that their respective contents are 5 mol% or more when a total amount of the free amino acid is 100 mol%. In particular, the adsorbent contains 10 mol% or more of lysine as a free amino acid. This contributes to improving the recovery efficiency for the metal compound. A total amount of No. 1-1 amino acid as a free amino acid is 10 mol% or more. This contributes to improving the recovery efficiency for the metal compound.

The adsorbent contains a total amount of 0.5 mass% or more of the free amino acid composed of the first amino acid relative to a total amount of a solid obtainable by drying the adsorbent, namely, a solid content of the adsorbent. This contributes to improving the recovery efficiency of the metal compound.

As to the foregoing free amino acids, aspartic acid, and at least one kind of an amino acid selected from glutamic acid and valine are contained as a free amino acid, the content of at least one kind of an amino acid selected from glutamic acid and valine is larger than the content of aspartic acid. A free amino acid composed of glutamic acid and valine has a positive zeta potential by adjusting a pH of the solution to an acid side, and adsorbs a metal compound ion (anion) in solution, while the aspartic acid has low ability to adsorb the metal compound (ion). It is therefore possible to improve adsorption efficiency for the metal compound by keeping the content of at least one kind selected from glutamic acid and valine higher than the content of aspartic acid in the free amino acid.

The kind and content of the free amino acid contained in the adsorbent can be determined by free amino acid analysis (also referred to as biological amino acid analysis). A content ratio of the total amount of free amino acids to the solid content of the adsorbent can be calculated from a mass of the free amino acids of the adsorbent and a mass of the solid content of the adsorbent. When the adsorbent is in solid form, such as powder, for example, the adsorbent is added to pure water having a liquid temperature of 25°C, and the adsorbent is suspended by stirring for 10 minutes while rotating a magnetic stator at a rotation speed of 500 rpm. A suspension thereof is used for free amino acid analysis. When the adsorbent is solution form, the solution is subjected to free amino acid analysis, and a calculation can be made from a total amount of the free amino acids, and a mass of a solid content of the adsorbent obtainable by subjecting the solution of the adsorbent to centrifugal separation. The mass of the solid content of the adsorbent needs to be measured in a state of being sufficiently dried, for example, under drying conditions of 60°C for 24 hours.

A free amino acid to be incorporated into a bio-based material is carried on a surface of a base material that is composed of a peptide and a protein. Thus, the free amino acid is carried on the peptide and protein, each having a large molecular weight. This facilitates handling of the adsorbent. This also makes it possible to concentrate the adsorbent with a simple method, such as filtering, when recovering the adsorbent with a metal compound adsorbed thereon from a solution containing the metal compound. Although the base material may be a resin or inorganic material besides the bio-based material, the bio-based material is capable of easily increasing the free amino acid. In the first embodiment, the free amino acid is carried on a body surface of a microorganism.

When the base material of the adsorbent is a resin or inorganic material, a large number of free amino acids can be carried on the surface of the base material, provided that the base material is in the form of a large specific surface area, such as powder and a porous body. When the base material is the porous body, amino acid can also be carried on an inner wall of a pore.

When the adsorbent is composed of the bio-based material, an amino acid that does not contribute to adsorption reaction (hereinafter also referred to as "an inert amino acid") is present besides the free amino acid. Examples of the inert amino acid include amino acids that are present at an intermediate position in amino acids joined together by peptide bonds, and amino acids that are present at internal positions not exposed to the surface of the adsorbent.

When the adsorbent is composed of the bio-based material, in order to enhance the content ratio of the free amino acids in the adsorbent, it is effective to convert the inert amino acid into a free amino acid by carrying out processing to cleave the peptide bonds of the inert amino acid being present in the adsorbent.

For example, when an organic matter is a microorganism, it is possible to cleave peptide bonds being present in the microorganism with an existing processing method. Specifically, the protein constituting the microorganism is decomposed by a protein decomposition enzyme, such as trypsin, Lysyl Endopeptidase, and v8 protease. This makes it possible to convert at least a part of the inert amino acid contained in the body of the microorganism into a free amino acid. As another method of converting the inert amino acid into a free amino acid, there is also an effective method with which protein is decomposed by subjecting the adsorbent to, for example, heating treatment at 60°C or above, boiling treatment, or heating and pressurizing treatment using an autoclave apparatus or the like. When the adsorbent is a living organism, such as a microorganism, and the adsorbent needs not be preserved in solution and is preservable as a solid as in the case of decomposed inorganic matter, neither a large-scale facility for cultivation and preservation nor maintenance therefor is necessary, thus leading to a downsized facility.

The adsorbent is not limited to the foregoing form in which the free amino acid is carried on the surface of the base material.

An adsorbent of a second embodiment contains at least one kind of a first amino acid selected from among alanine, cystine, methionine, tyrosine, lysine, valine, glutamic acid, histidine, proline, threonine, asparagine, glycine, isoleucine, ornithine, arginine, serine, citrulline, and cystathionine. At least a part of the first amino acid is present in solution as a free amino acid. The adsorbent contains a total amount of 10 mol% or more of the free amino acid of the first amino acid relative to a total amount of the free amino acid.

In other words, the second adsorbent is present as a solid, and does not contain the free amino acid in the solid, while has the free amino acid in solution.

An example of the adsorbent of the second embodiment is a salt of a first amino acid. Examples of the salt include hydrochloride, nitrate, sulfate, acetate, and carbonate. The adsorbent composed of the salt of an amino acid dissolves in a liquid and gives a free amino acid. As in the case with the first embodiment, the adsorbent is added to a solution in which a metal compound is dissolved, and pH adjustment is made so that the free amino acid of the adsorbent has a positive zeta potential. On this occasion, the metal compound is present as a negative ion, and consequently the negative ion of the metal compound is adsorbed onto a positively charged free amino acid of the adsorbent.

The second embodiment is capable of increasing the content ratio of the free amino acid in the adsorbent than the form in which the free amino acid is carried on the surface of the base material. This leads to enhanced adsorption efficiency for the metal compound, and ensures that a large amount of the metal compound can be adsorbed with a small amount of the adsorbent. Additionally, when the metal compound is recovered after adsorption of the metal compound, there remains a low content of unnecessary materials that needs to be discarded, and it is easy to handle, thereby reducing manufacturing costs. Furthermore, the adsorbent is not a living organism, such as bacteria and microorganisms, and it is therefore easy to preserve and manage the adsorbent.

Although the adsorbent composed of the salt that is the second embodiment may be in solution form, the adsorbent in solid form facilitates handling, preservation, and management. In particular, the adsorbent in powder form readily dissolves in solution. Alternatively, the adsorbent may be in pellet form in order to facilitate handling of the adsorbent.

Satisfactory adsorption efficiency is attainable when the salt of the first amino acid is composed mainly of at least one of lysine and arginine. In particular, L-lysine hydrochloride is stable and inexpensive. The description "being composed mainly of at least one of lysine and arginine" means that a ratio of a total mass of the salt of lysine or the salt of arginine in the adsorbent is 50 mass% or more relative to a total amount of the adsorbent.

A total amount of the salt of lysine and the salt of arginine each being present in the adsorbent is preferably 90 mass% or more. This ensures that a large amount of a metal compound can be adsorbed with a small amount of the adsorbent. The total amount of the salt of lysine and the salt of arginine each being in the adsorbent is more preferably in a range of 95 mass% or more.

The costs of the adsorbent is reducible by incorporating therein a salt of glutamic acid as the salt of the first amino acid. In particular, monosodium glutamate is stable and inexpensive.

The content of the salt of glutamic acid being present in the adsorbent needs to be 90 mass% or more. This makes it possible to inexpensively recover the metal compound. The total amount of the salt of glutamic acid is preferably in a range of 95 mass% or more.

The free amino acid is not limited to only one kind. For example, the salt of another first amino acid, such as lysine and arginine, can be added together with the salt of glutamic acid.

A method of recovering a metal compound using the adsorbent of the present embodiment is described below.

### (First Embodiment of Method of Recovering Metal Compound)

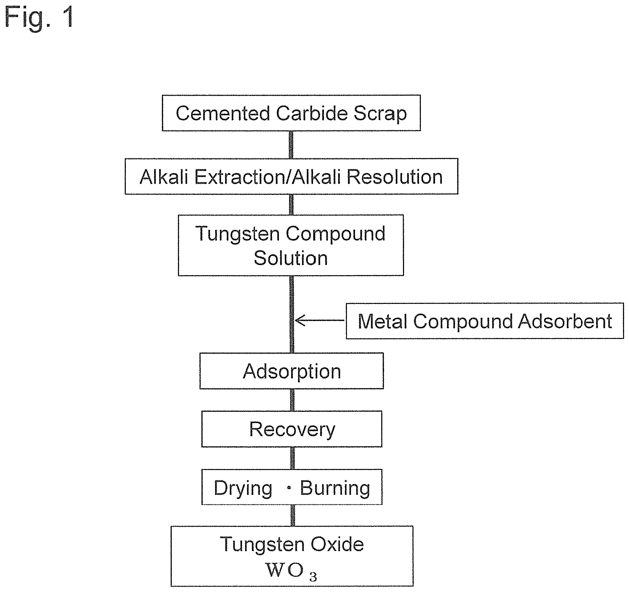

As the first embodiment of the method of recovering a metal compound, a method of recovering tungsten oxide from cemented carbide scrap is described specifically with reference to FIG. 1. A similar method is applicable to molybdenum (molybdenum oxide). The cemented carbide scrap is composed of cemented carbide composed mainly of, for example, metal tungsten and tungsten carbide (WC). Examples thereof include scrap generated during manufacturing process of cemented carbide tools or the like, hard scrap of used tools and the like, and powdery soft scrap, such as grinding sludge.

The cemented carbide alloy that is one kind of super hard alloys employs, as a main material, a complex carbide, such as tungsten metal and tungsten carbide, and employs, as a binding phase, iron, nickel, cobalt, or the like. The cemented carbide alloy contains, as additive ingredients, TiC, TaC, NbC, VC, Cr₃C₂ or the like as needed. Examples of processing objects containing a target cemented carbide include cutting tools (e.g. cutting inserts, drills, and end mills), metal molds (e.g. molding rolls and molding dies), and civil engineering and mining tools (e.g. oil-well drilling tools and rock crushing tools). Although the process of recovering a metal compound from wastes is described below in the present embodiment, without limitation thereto, this is also applicable for extracting a metal compound from an ore.

A first step in the recovery method is an alkali extraction/alkali melting step of obtaining a tungsten compound solution with a tungsten compound ion dissolved therein by eluting metal ingredients of cemented carbide scrap into an alkali solution. As a method of obtaining the metal compound solution, for example, there are alkali extraction method and alkali melting method. The alkali extraction method is one in which preliminarily oxidized and roasted scrap is subjected to alkali extraction with, for example, an NaOH solution. The alkali melting method is one in which melting is carried out at the same time as oxidation with a molten salt of a sodium salt, such as NaNO₃, Na₂SO₄, Na₂CO₃, and NaOH.

For example, soft scrap is highly reactive and difficult to control, and it is therefore more efficient to employ the alkali extraction method. The alkali melting method is more efficient for hard scrap because only a surface portion thereof is oxidized by oxidation roasting.

The adsorbent of the present embodiment is added to the tungsten compound solution so obtained. For example, when the adsorbent is a microorganism, the adsorbent is added so that the adsorbent amounts to 1g to 10 kg per 1 m³ of the tungsten compound solution whose tungsten concentration is adjusted to 1-10 mmol/l (a tungsten concentration is 0.1-10 mmol relative to 1 liter of alkali solution). When the adsorbent is composed of the salt of the first amino acid, the adsorbent is added at such a content ratio that a total amount of addition of the salt of the first amino acid in the adsorbent is 0.2-1.1 mol relative to 1 mol of a metal ingredient of the metal compound. This ensures that a large amount of the metal compound can be adsorbed with a small amount of the adsorbent.

The total amount of addition of the salt of the first amino acid is 10-300 g/l relative to the metal compound solution. This prevents an increase in viscosity of the solution, thereby preventing a decrease in recovery efficiency for the metal compound. In particular, when the adsorbent is composed of the salt of amino acid, the viscosity of the solution is less liable to increase, thereby improving working efficiency.

Temperature needs to be controlled according to activity of the free amino acid, and it is usually kept at room temperature. The tungsten compound solution with the adsorbent added therein is adjusted by using hydrochloric acid or the like so that the free amino acid has a positive zeta potential. This causes adsorption of a tungsten compound ion that is anion onto the adsorbent (adsorption step).

The solution has a pH of less than 7 (acidity). When the free amino acid is lysine and arginine, a suitable pH is 4 or less, preferably 1 to 3, and more preferably pH is 1 to 2.3. When the free amino acid is glutamic acid, a suitable pH is 1.5 or less. This leads to an enhanced recovery rate for the tungsten compound. Either of the step of adjusting the pH of the solution and the step of adding the adsorbent into the solution containing the metal compound may be carried out first.

When the adsorbent is the salt of the first amino acid, an adsorption reaction time not exceeding one hour results in higher recovery efficiency for the adsorbent. In other words, when the adsorption reaction time exceeds our hour, a part of the adsorbed metal compound may be eliminated from the free amino acid.

Subsequently, the adsorbent with the tungsten compound ion adsorbed thereon is dehydrated by means of centrifugal separation or the like. Then, impurities are removed by, for example, pure water cleaning as needed. This makes it possible to easily condense and recover the tungsten compound (recovery step).

Thereafter, the tungsten compound is oxidized and organic ingredients containing the adsorbent are removed by, for example, burning the adsorbent with the tungsten compound ion adsorbed thereon at a temperature of 300°C or above in the atmosphere (burning step). This results in tungsten oxide (WO₃). The tungsten oxide is then heat treated at a temperature of 500°C or above in a reducing atmosphere, and the tungsten oxide compound is subjected to reduction and carbonization, thereby obtaining tungsten carbide.

The method of recovering the metal compound according to the present embodiment is capable of reducing man-hour, the amount of chemicals to be used, and waste liquid than the conventional method of recovering the metal compound. It is therefore possible to inexpensively recover the tungsten compound.

### (Second Embodiment of Method of Recovering Metal Compound)

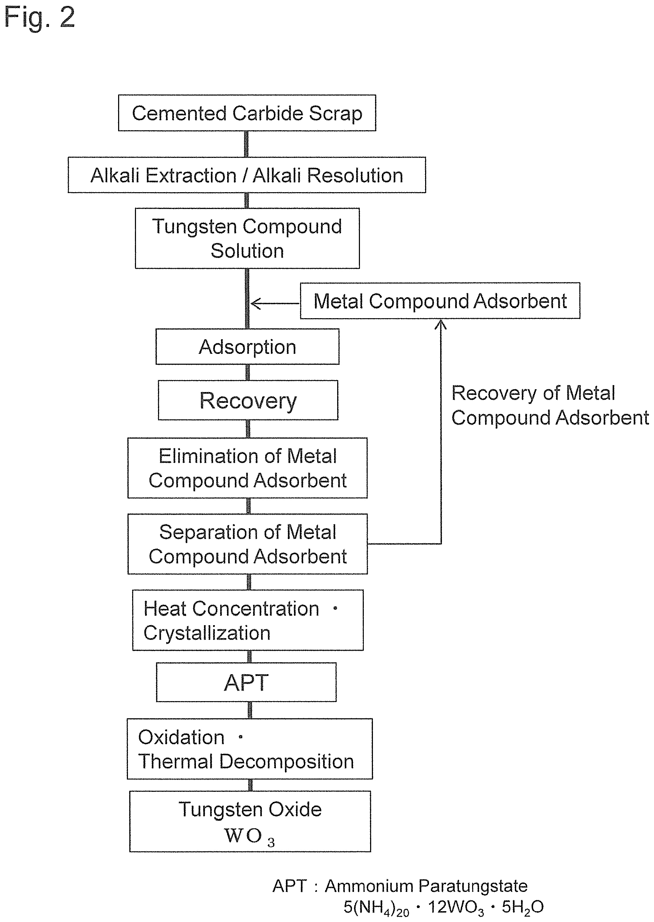

As the second embodiment of the method of recovering a metal compound in the present embodiment, a method of recovering tungsten oxide from cemented carbide scrap is described specifically with reference to FIG. 2. A similar method is applicable to molybdenum (molybdenum oxide).

The second embodiment is widely different from the first embodiment in that the added adsorbent is recovered for reuse. Similarly to the first embodiment, firstly, a tungsten compound solution with a tungsten compound ion dissolved therein is obtained by eluting metal ingredients of cemented carbide scrap into an alkali solution. The adsorbent is added to the solution. The tungsten compound solution with the adsorbent added therein is subjected to pH adjustment to the acid side by using hydrochloric acid or the like. This causes the adsorption of the tungsten compound ion onto the adsorbent (adsorption step).

Subsequently, the adsorbent with the tungsten compound ion adsorbed thereon is dehydrated by means of centrifugal separation or the like. Then, impurities are removed as needed. Thus, the adsorbent with the tungsten compound adsorbed thereon is condensed and recovered (recovery step). Thereafter, a suspension is prepared by adding the adsorbent with the condensed tungsten compound ion adsorbed thereon to a liquid for elimination, such as pure water. The suspension is neutralized or alkalized by adding an ammonia solution, such as NH₄Cl, to the suspension. The neutralization or alkalization, for example, pH 7 or more, of the suspension causes elimination of the tungsten compound ion from the adsorbent into the solution (metal compound adsorbent elimination step).

Subsequently, the suspension containing the adsorbent and the tungsten compound ion eliminated from the adsorbent is subjected to centrifugal separation and filtering, thus being separated into the adsorbent and the liquid for elimination containing the tungsten compound ion (metal compound adsorbent separation step). The adsorbent so separated can be recovered for reuse.

Subsequently, the tungsten compound is crystallized as ammonium paratungstate (APT) by subjecting the liquid for elimination containing the tungsten compound ion to heat concentration. Then, tungsten oxide is obtainable by subjecting the ATP to oxidation and thermal decomposition. Tungsten carbide is obtainable by subjecting the obtained tungsten oxide to heat treatment and carbonization in a reducing atmosphere.

The adsorbent is reusable in the second embodiment, thereby reducing costs for repeat purchase of the adsorbent, manufacturing costs, and waste disposal costs.

Thus, the method of recovering the metal compound according to the present embodiment is capable of achieving the simple process sequence and reducing the amount of chemicals used and the amount of waste liquid, thereby inexpensively recovering the tungsten compound.

### EXAMPLE 1

As an adsorbent, E. coil and one which was obtainable by subjecting E. coil to automatic crepe processing under conditions of a temperature of 120°C and a vapor pressure of 200 kPa for 10 minutes were prepared. Evaluation was made below by taking the adsorbent before the automatic crepe processing as an adsorbent A and the adsorbent after the automatic crepe processing as an adsorbent B.

The kind and content of an amino acid contained in each of the adsorbent A and the adsorbent B were analyzed with a free amino acid analysis (ninhydrin method) using an L-8800A type high-speed amino acid composition analyzer (manufactured by Hitachi, Ltd.). The free amino acid analysis was performed using sample solutions obtainable by adding a 20% sulfosalicylic acid solution to each of the adsorbent A and the adsorbent B, and stirring them, followed by filtering with a 0.22 µm filter. Analysis results are presented in Table 1. Although Table 1 presents a content ratio of each amino acid relative to a total amount of a free amino acid detected by the free amino acid analysis, a free amino acid of a minor ingredient is taken as other amino acid, and description of a specific amino acid is omitted.

The adsorbent B contained 10 mol% or more of the first amino acid. The adsorbent A had a high content ratio of the second amino acid, and a content ratio of the first amino acid thereof was less than 10 mol%.

A solid content of the adsorbent A and a solid content of the adsorbent B were subjected to centrifugal separation, and pellets so obtained were dried at 60°C for 24 hours. A mass of each of the solid content of the adsorbent A and the solid content of the adsorbent B were measured. Further, on the basis of the results of the free amino acid analysis for the adsorbent A and the adsorbent B, a mass of each of free amino acids was obtained from a molecular weight and a content ratio of each of the free amino acids, and a total amount of the free amino acids contained in each of the adsorbent A and the adsorbent B was calculated. A content ratio of the total amount of the free amino acids contained in the adsorbent A and that in the adsorbent B relative to the obtained mass of the solid content were calculated. The total amount of the free amino acid composed of the first amino acid relative to the solid content in the adsorbent A and that in the adsorbent B were respectively 0.15 mass% and 0.72 mass%.

**[Table 1]**

| Amino Acid | | | Molecular Weight | Adsorbent A^{*1} | Adsorbent B |
|---|---|---|---|---|---|
| | | | | mol % | mol % |
| First Amino Acid | No. 1-1 Amino Acid | Alanine | 89.1 | n.d. | 5.12 |
| | | Cystine | 240.3 | n.d. | 5.70 |
| | | Methionine | 149.21 | n.d. | 5.26 |
| | | Tyrosine | 181.19 | n.d. | 6.68 |
| | | Lysine | 146.19 | n.d. | 11.82 |
| | | Valine | 117.15 | 2.32 | 5.85 |
| | | Glutamic acid | 147.13 | 5.30 | 6.73 |
| | | Histidine | 155.16 | n.d. | 5.93 |
| | | Proline | 115.13 | n.d. | 5.91 |
| | No.1-2 Amino Acid | Threonine | 119.12 | n.d. | 1.20 |
| | | Asparagine | 132.12 | n.d. | 4.21 |
| | | Glycine | 75.07 | n.d. | 3.01 |
| | | Isoleucine | 131.17 | n.d. | 1.22 |
| | | Ornithine | 132.17 | n.d. | 2.19 |
| | | Arginine | 174.21 | n.d. | 1.55 |
| | No. 1-3 Amino Acid | Serine | 105.09 | n.d. | 0.77 |
| | | Citrulline | 175.19 | n.d. | 0.99 |
| | | Cystathionine | 222.27 | n.d. | 0.32 |
| Second Amino Acid | | Phosphoserine | 185.06 | 26.57 | 15.05 |
| | | Aspartic acid | 133.1 | 52.37 | 5.57 |
| | | Leucine | 131.17 | 4.70 | 1.23 |
| | | Phenylalanine | 165.19 | 8.73 | 3.68 |
| Other Amino Acid | | | - | 0.01 | 0.01 |

| | | | | | |
|---|---|---|---|---|---|
| *1 n.d.: not detected | | | | | |

A recovery test of the tungsten compound from a waste material was conducted using each of the adsorbent A and the adsorbent B. Firstly, a roasted matter was obtained by crushing a used cutting tool made of cemented carbide, followed by oxidation roasting. A tungsten compound solution with 0.8 mmol (WO) of a tungsten compound ion dissolved therein was obtained by eluting the obtained roasted matter into an alkali solution (NaOH solution).

By adding hydrochloric acid (HCl) to the tungsten compound solution, a pH was adjusted to 1.8, and 7.3×10¹⁴ cells/m³ (2.24 cm³) of each of the adsorbent A and the adsorbent B was added thereto. The solution with the adsorbent A added therein was taken as a solution A. The solution with the adsorbent B added therein was taken as a solution B. The amount of addition of each of the adsorbents was set to a ratio of 20 g/m³ in terms of a solid content of the adsorbent with respect to a volume of the tungsten compound solution. After adding the adsorbent, the solution A and the solution B were stirred at 23°C for 30 minutes.

The stirred solution A and the stirred solution B were subjected to centrifugal separation, and tungsten concentrations WA and WB respectively in a solution A' and a solution B', each being supernatant liquid, were measured by ICP atomic emission spectroscopy. WA and WB were respectively compared with WO before adding the adsorbent A and WO before adding the adsorbent B. As the result, WA/WO was 63%, and WB/WO was 3%. The residual tungsten compound was adsorbed on each of the adsorbent A and the adsorbent B recovered by the centrifugal separation. As the result, the recovery rate for the tungsten compound by the adsorbent A and that by the adsorbent B were respectively 37% and 97%.

This shows that the adsorbent B containing the first amino acid has the higher recovery rate for the tungsten compound than the adsorbent A in which the content of the first amino acid does not exceed 10 mol%.

In Table 1, each of the adsorbents A and B contained aspartic acid, glutamic acid, and valine. Specifically, the content of aspartic acid in the adsorbent A was 50 mol% or more, while the content of aspartic acid in the adsorbent B was less than each of the content of glutamic acid and the content of valine. This shows that the adsorbent B in which the content of at least one of glutamic acid and valine is larger than the content of aspartic acid has the higher recovery rate for the tungsten compound than the adsorbent A in which the content of aspartic acid is 50 mol% or more.

### EXAMPLE 2

Adsorbents, each having a kind, an amount of addition at a mole ratio of WO₄²⁻ relative to 50 mmol, a concentration relative to a tungsten compound solution as presented in Table 2, were respectively added to the tungsten compound solution, and their respective pHs were adjusted to values presented in Table 2 by adding hydrochloric acid (HCl). After the pH adjustment, each of the solutions was stirred at 23°C for 30 minutes.

The stirred solution was subjected to centrifugal separation, and a tungsten concentration in a supernatant liquid was measured by ICP atomic emission spectroscopy. The tungsten concentration in the supernatant liquid and a tungsten concentration before adding the adsorbent were compared with each other. Then, a concentration of the unrecovered tungsten compound and a concentration of the recovered tungsten compound were calculated, and a recovery rate for the tungsten compound was calculated. The results are presented in Table 2.

**[Table 2]**

| Sample No. | pH | Na₂WO₄ (mmol) | Adsorbent | | | Processing time of 30 minutes W Recovery Rate (%) | Processing time of 2 hours W Recovery Rate (%) |
|---|---|---|---|---|---|---|---|
| | | | Kind | Amount of Addition (mole ratio) | Concentration in Solution (g/l) | | |
| 1 | 1.8 | 0.8 | L-lysine hydrochloride | 0.04 | 0.01 | 97 | 93 |
| 2 | 2.0 | 5.0 | L-lysine hydrochloride | 0.3 | 3.0 | 96 | 93 |
| 3 | 2.0 | 50.0 | L-lysine hydrochloride | 1.0 | 93 | 99 | 95 |
| 4 | 2.0 | 50.0 | L-lysine hydrochloride | 0.8 | 75 | 95 | 92 |
| 5 | 2.0 | 50.0 | L-lysine hydrochloride | 0.5 | 47 | 80 | 75 |
| 6 | 2.0 | 50.0 | L-lysine hydrochloride | 1.5 | 140 | 75 | 71 |
| 7 | 2.0 | 50.0 | lysine nitrate | 1.0 | 107 | 95 | 91 |
| 8 | 2.0 | 50.0 | lysine acetate | 1.0 | 105 | 93 | 89 |
| 9 | 2.0 | 50.0 | arginine hydrochloride | 1.0 | 107 | 94 | 90 |
| 10 | 2.0 | 100.0 | arginine hydrochloride | 1.0 | 214 | 90 | 87 |
| 11 | 1.0 | 50.0 | L-lysine hydrochloride | 1.0 | 93 | 60 | 58 |
| 12 | 1.4 | 50.0 | L-lysine hydrochloride | 1.0 | 93 | 85 | 82 |
| 13 | 3.0 | 50.0 | L-lysine hydrochloride | 1.0 | 93 | 40 | 30 |

As apparent from the results in Table 2, it was found out that all samples had a high recovery rate for the tungsten compound. With the adsorbent composed of the microorganism in Example 1, 7×10¹⁴ cells/m³ (2.24 cm³) of the adsorbent was needed to recover 0.8 mmol of the tungsten compound. With Sample No.1 in Example 2, only 0.12 m³ of the adsorbent was needed to recover the 0.8 mmol of the tungsten compound. In other words, it was found out that the adsorbent composed of the salt of amino acid, whose amount is less than that of the adsorbent composed of the microorganism, achieved higher recovery efficiency for the metal compound.

It was also found out that the recovery rate in processing time of 30 minutes being within one hour was higher than that in processing time of two hours.

### EXAMPLE 3

Adsorbents, each having a kind, an amount of addition at a mole ratio of a tungsten compound ion (WO₄²⁻) relative to 50 mmol, a concentration relative to a tungsten compound solution as presented in Table 3, were respectively added to the tungsten compound solution, and their respective pHs were adjusted to values presented in Table 3 by adding hydrochloric acid (HCl). After the pH adjustment, each of the solutions was stirred at 23°C for 30 minutes.

The stirred solution was subjected to centrifugal separation, and a tungsten concentration in a supernatant liquid was measured by ICP atomic emission spectroscopy. The tungsten concentration in the supernatant liquid and a tungsten concentration before adding the adsorbent were compared with each other. Then, a concentration of the unrecovered tungsten compound and a concentration of the recovered tungsten compound were calculated, and a recovery rate for the tungsten compound was calculated. The results are presented in Table 3.

**[Table 3]**

| Sample No. | pH | Na₂WO₄ (mmol) | Adsorbent | | | W Recovery Rate (%) |
|---|---|---|---|---|---|---|
| | | | Kind | Amount of Addition (mole ratio) | Concentration in Solution (g/l) | |
| 1 | 2.3 | 7.09 | L-monosodium glutamate | 1.00 | 60 | 90.8 |
| 2 | 2.3 | 7.09 | L-monosodium glutamate | 1.50 | 90 | 91.0 |
| 3 | 2.3 | 7.09 | L-monosodium glutamate | 2.00 | 120 | 92.3 |
| 4 | 2.1 | 7.09 | L-monosodium glutamate | 1.00 | 60 | 91.2 |
| 5 | 1.8 | 7.09 | L-monosodium glutamate | 1.00 | 60 | 92.5 |
| 6 | 1.5 | 7.09 | L-monosodium glutamate | 1.00 | 60 | 95.3 |
| 7 | 2.3 | 14.20 | L-monosodium glutamate | 0.65 | 78 | 66.5 |
| 8 | 2.3 | 14.20 | L-monosodium glutamate | 0.80 | 96 | 81.1 |
| 9 | 2.3 | 14.20 | L-monosodium glutamate | 1.00 | 120 | 89.7 |
| 10 | 2.3 | 14.20 | L-monosodium glutamate | 1.50 | 180 | 93.8 |
| 11 | 2.3 | 7.09 | L-gtutamic acid acetate | 1.00 | 60 | 91.3 |
| 12 | 2.3 | 7.09 | L-glutamic acid acetate | 1.00 | 60 | 94.5 |
| 13 | 2.3 | 7.09 | L-monosodium glutamate +L-lysine hydrochloride | 0.67 | 42 | 95.3 |

As apparent from the results in Table 3, it was found out that all samples achieved a high recovery rate for the tungsten compound by a small amount of addition of the adsorbent.

## Claims

1. A metal compound adsorbent capable of adsorbing a compound of at least one of tungsten and molybdenum present in solution as a negative ion, comprising at least one kind of a first amino acid selected from among lysine, glutamic acid, and arginine;
wherein at least a part of the first amino acid is present in solution as a free amino acid, and
wherein the metal compound adsorbent comprises a total amount of 10 mol% or more of the free amino acid of the first amino acid relative to a total amount of the free amino acid.

2. The metal compound adsorbent according to claim 1, further comprising, as the free amino acid, at least one kind of a second amino acid selected from among phosphoserine, aspartic acid, leucine, and phenylalanine.

3. A method of recovering a metal compound of at least one of tungsten and molybdenum, comprising:
obtaining a metal compound solution in which a metal compound ion of a metal compound that becomes a negative ion in solution is dissolved;
causing adsorption of the metal compound ion onto the metal compound adsorbent by adjusting a pH of the metal compound solution to a value at which a free amino acid in the metal compound adsorbent becomes a positive ion by adding either one of the metal compound adsorbents according to claim 1 or 2 to the metal compound solution; and
recovering the metal compound adsorbent with the metal compound ion adsorbed thereon.

4. The method of recovering a metal compound according to claim 3, wherein the metal compound adsorbent comprises a salt of the first amino acid.

5. The method of recovering a metal compound according to claim 4, wherein a total amount of addition of a salt of the lysine and a salt of the arginine is 0.2-1.1 mol relative to 1 mol of a metal ingredient in the metal compound solution.

6. The method of recovering a metal compound according to claim 5, wherein a total amount of addition of the salt of the lysine and the salt of the arginine is 10-300 g/l relative to the metal compound solution.

7. The method of recovering a metal compound according to claim 6, wherein a total amount of addition of a salt of amino acid containing a salt of the glutamic acid is 0.2-1.1 mol relative to 1 mol of a metal ingredient in the metal compound solution.

8. The method of recovering a metal compound according to claim 7, wherein a total amount of addition of a salt of amino acid containing the salt of the glutamic acid is 10-300 g/l relative to the metal compound solution.

9. The method of recovering a metal compound according to any one of claims 3 to 8, wherein the adsorption comprises adjusting a pH of the metal compound solution to 1 to 3.

10. The method of recovering a metal compound according to any one of claims 3 to 9, wherein adsorption time in the adsorption is within one hour.

## Patentansprüche

1. Metallverbindung-Adsorptionsmittel, das in der Lage ist, eine Verbindung von mindestens einem aus Wolfram und Molybdän, das gelöst als negatives Ion vorliegt, zu adsorbieren, aufweisend mindestens eine Art einer ersten Aminosäure, die aus Lysin, Glutaminsäure und Arginin ausgewählt ist,
wobei mindestens ein Teil der ersten Aminosäure gelöst als freie Aminosäure vorliegt, und
wobei das Metallverbindung-Adsorptionsmittel eine Gesamtmenge von 10 Mol-% oder mehr der freien Aminosäure der ersten Aminosäure aufweist, bezogen auf eine Gesamtmenge der freien Aminosäure.

2. Metallverbindung-Adsorptionsmittel gemäß Anspruch 1, ferner aufweisend, als freie Aminosäure, mindestens eine Art einer zweiten Aminosäure, die aus Phosphoserin, Asparaginsäure, Leucin und Phenylalanin ausgewählt ist.

3. Verfahren zum Rückgewinnen einer Metallverbindung von mindestens einem aus Wolfram und Molybdän, aufweisend:
Erhalten einer Metallverbindungslösung, in der ein Metallverbindungs-Ion einer Metallverbindung, das gelöst ein negatives Ion bildet, gelöst wird;
Bewirken der Adsorption des Metallverbindungs-Ions auf dem Metallverbindung-Adsorptionsmittel durch einstellen eines pH-Werts der Metallverbindungslösung auf einen Wert, bei dem eine freie Aminosäure in dem Metallverbindung-Adsorptionsmittel ein positives Ion bildet, durch Zugabe von einem der Metallverbindung-Adsorptionsmitteln gemäß Anspruch 1 oder 2 zu der Metallverbindungslösung; und
Rückgewinnen des Metallverbindung-Adsorptionsmittels mit dem darauf adsorbierten Metallverbindungs-Ion.

4. Verfahren zum Rückgewinnen einer Metallverbindung gemäß Anspruch 3, wobei das Metallverbindungadsorptionsmittel ein Salz der ersten Aminosäure aufweist.

5. Verfahren zum Rückgewinnen einer Metallverbindung gemäß Anspruch 4, wobei eine Gesamtmenge der Zugabe eines Salzes des Lysins und eines Salzes des Arginins 0,2-1,1 Mol beträgt, bezogen auf 1 Mol eines Metallbestandteils in der Metallverbindungslösung.

6. Verfahren zum Rückgewinnen einer Metallverbindung gemäß Anspruch 5, wobei eine Gesamtmenge der Zugabe des Salzes des Lysins und des Salzes des Arginins 10-300 g/l beträgt, bezogen auf die Metallverbindungslösung.

7. Verfahren zum Rückgewinnen einer Metallverbindung gemäß Anspruch 6, wobei eine Gesamtmenge der Zugabe eines Salzes von Aminosäure, die ein Salz der Glutaminsäure enthält, 0,2-1,1 Mol beträgt, bezogen auf 1 Mol eines Metallbestandteils in der Metallverbindungslösung.

8. Verfahren zum Rückgewinnen einer Metallverbindung gemäß Anspruch 7, wobei eine Gesamtmenge der Zugabe eines Salzes einer Aminosäure, die das Salz der Glutaminsäure enthält, 10-300 g/l, bezogen auf die Metallverbindungslösung, beträgt.

9. Verfahren zum Rückgewinnen einer Metallverbindung gemäß irgendeinem der Ansprüche 3 bis 8, wobei die Adsorption das Einstellen eines pH-Wertes der Metallverbindungslösung auf 1 bis 3 aufweist.

10. Verfahren zum Rückgewinnen einer Metallverbindung gemäß irgendeinem der Ansprüche 3 bis 9, wobei die Adsorptionszeit bei der Adsorption innerhalb einer Stunde liegt.

## Revendications

1. Adsorbant de composé métallique capable d'adsorber un composé d'au moins un élément parmi le tungstène et le molybdène présent en solution sous forme d'ion négatif, comprenant au moins un type d'un premier acide aminé choisi parmi la lysine, l'acide glutamique et l'arginine ;
dans lequel au moins une partie du premier acide aminé est présente en solution sous forme d'acide aminé libre, et
dans lequel l'adsorbant de composé métallique comprend une quantité totale de 10 % en moles ou plus de l'acide aminé libre du premier acide aminé par rapport à une quantité totale de l'acide aminé libre.

2. Adsorbant de composé métallique selon la revendication 1, comprenant en outre, comme acide aminé libre, au moins un type d'un deuxième acide aminé choisi parmi la phosphosérine, l'acide aspartique, la leucine et la phénylalanine.

3. Procédé de récupération d'un composé métallique d'au moins un élément parmi le tungstène et le molybdène, comprenant les étapes consistant à :
obtenir une solution de composé métallique dans laquelle un ion de composé métallique d'un composé métallique qui devient un ion négatif en solution est dissous ;
provoquer l'adsorption de l'ion de composé métallique sur l'adsorbant de composé métallique en ajustant un pH de la solution de composé métallique à une valeur à laquelle un acide aminé libre dans l'adsorbant de composé métallique devient un ion positif en ajoutant l'un ou l'autre des adsorbants de composé métallique selon la revendication 1 ou 2 à la solution de composé métallique ; et
récupérer l'adsorbant de composé métallique avec l'ion de composé métallique adsorbé sur celui-ci.

4. Procédé de récupération d'un composé métallique selon la revendication 3, dans lequel l'adsorbant de composé métallique comprend un sel du premier acide aminé.

5. Procédé de récupération d'un composé métallique selon la revendication 4, dans lequel une quantité totale d'addition d'un sel de la lysine et d'un sel de l'arginine est de 0,2 à 1,1 mole par rapport à 1 mole d'un ingrédient métallique dans la solution de composé métallique.

6. Procédé de récupération d'un composé métallique selon la revendication 5, dans lequel une quantité totale d'addition du sel de la lysine et du sel de l'arginine est de 10-300 g/l par rapport à la solution de composé métallique.

7. Procédé de récupération d'un composé métallique selon la revendication 6, dans lequel une quantité totale d'addition d'un sel d'acide aminé contenant un sel de l'acide glutamique est de 0,2-1,1 mole par rapport à 1 mole d'un ingrédient métallique dans la solution de composé métallique.

8. Procédé de récupération d'un composé métallique selon la revendication 7, dans lequel une quantité totale d'addition d'un sel d'acide aminé contenant le sel de l'acide glutamique est de 10-300 g/l par rapport à la solution de composé métallique.

9. Procédé de récupération d'un composé métallique selon l'une quelconque des revendications 3 à 8, dans lequel l'adsorption comprend l'ajustement d'un pH de la solution de composé métallique à 1 à 3.

10. Procédé de récupération d'un composé métallique selon l'une quelconque des revendications 3 à 9, dans lequel le temps d'adsorption dans l'adsorption est en une heure.
